# EUROPEAN PATENT APPLICATION

(11) **EP 1 398 955 A2**
(43) Date of publication of application: **17.03.2004**
(21) Application number: 03077653.8
(22) Date of filing: 25.08.2003
(51) Int. Cl.: H04N 1/46

(54) **Resizing digital images for digital camera-printer systems**

(30) Priority: 04.09.2002 US 235014
(71) Applicant: EASTMAN KODAK COMPANY, Rochester, New York 14650 (US)
(72) Inventor: Hamilton, John F. Eastman Kodak Company, Rochester New York 14650-2201 (US); Eckhaus, Neal Eastman Kodak Company, Rochester New York 14650-2201 (US)
(74) Representative: Weber, Etienne Nicolas

(57) **Abstract**

A method of resizing a digital image represented as a luminance and two chrominance channels, including the steps of resizing the luminance channel using bilinear interpolation; and resizing the chrominanace channels using nearest neighbor interpolation.

## Description

This invention relates to resizing digital images for digital printers and digital camera-printer systems.

Producing digital pictures at home is a growing trend that requires a printer with specific characteristics. A home picture printer needs to be both inexpensive and fast. In addition, they must handle the large images (those with several million pixels) produced by digital cameras currently on the market. Finally, the picture printer must provide reasonable image quality. The problem is that the market also requires picture printers to work directly with digital cameras, which themselves are subject to the same cost constraints. Because both the camera and the printer must be able to work in the absence of a desktop (or laptop) personal computer, they cannot rely on the availability of a powerful high speed numerical processor. For this reason, any image processing in a camera-printer system must be done on a low-cost, low speed processor. Thus, the problem is to print large digital images with reasonable image quality, and do it quickly on low speed numerical processors.

One of the most computationally intensive tasks in printing an image is resizing it to match the desired output dimensions. Currently, the fastest resizing algorithms do not reproduce fine image detail well. Smooth edges become jagged and fine lines become broken or lost. Such fast algorithms have high throughput but inferior image quality. There are slower resizing algorithms that can maintain fine image detail, but they require too much time when applied to large images using low speed processors. What is needed is a way to approximate the throughput of the fast resizing algorithm while maintaining the better image quality of the slower algorithm.

The object of this invention is to provide an improved method for resizing digital images in a way that has both high throughput and reasonable image quality.

This object is achieved in a method of resizing a digital image represented as a luminance and two chrominance channels and comprising the steps of 1) resizing the luminance channel using bilinear interpolation; and 2) resizing the chrominanace channels using nearest neighbor interpolation.

Quite unexpectedly, it has been found that the present invention has the following advantages: 1) the resized image has the same reasonable image quality as if all three channels had been resized with the bilinear interpolation algorithm; and 2) the processing throughput is still high because two of the three color channels are resized using the very fast nearest neighbor interpolation algorithm.
FIG. 1 is a high level block diagram showing the major components of a picture printer for compressed digital images;
FIG. 2 is a block diagram the rendering engine of the digital picture printer, and
FIG. 3 is a block diagram showing the two components of the image resizing process.

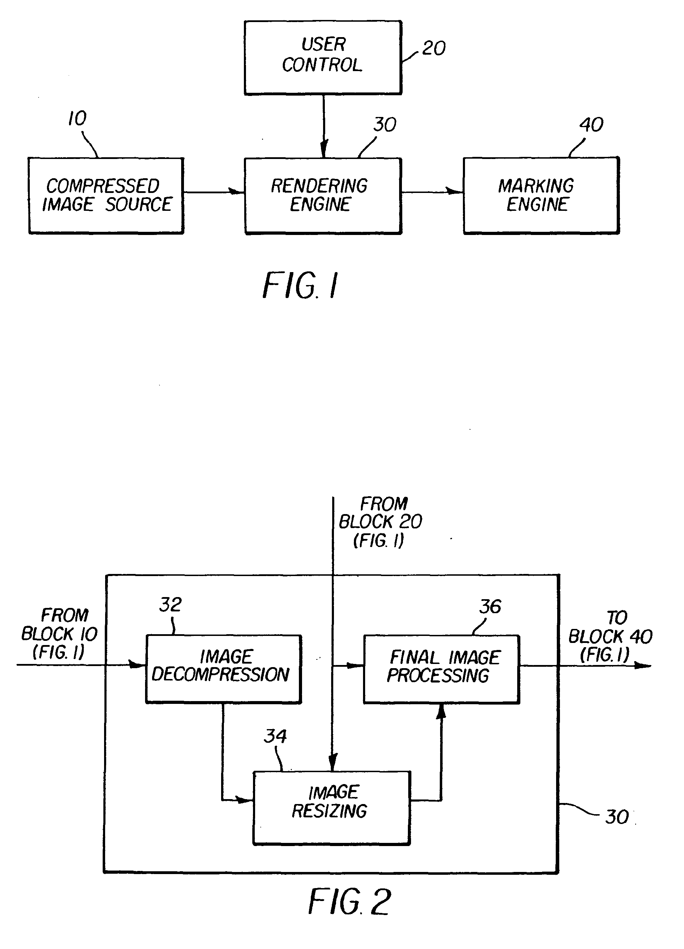

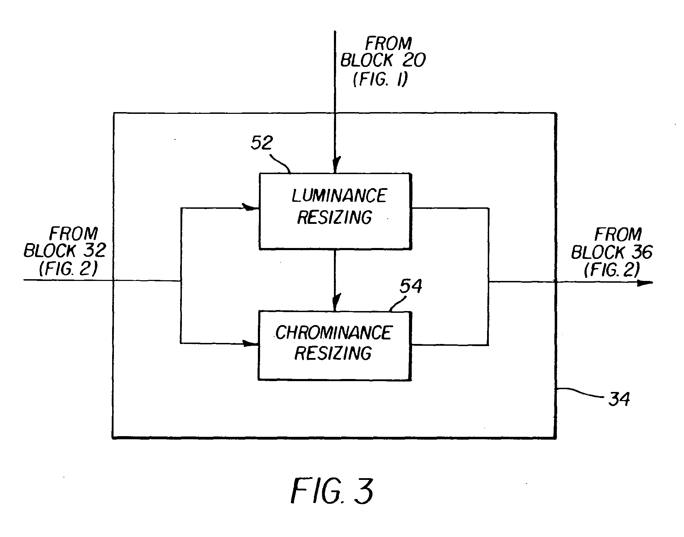

A high-level schematic of a printer is shown in FIG. 1. The compressed image source block 10 holds the compressed digital image that is to be printed. A common choice for the image compression and decompression method is the well-known JPEG method, which utilizes a luminance and chrominance image representation. One typical embodiment of the compressed image source block 10 is an individual flash memory card storing a JPEG compressed image, in which case the printer is functioning as a stand-alone printer. A second typical embodiment of the compressed image source block 10 is a digital camera storing a JPEG compressed image, in which case the printer is part of a digital camera-printer system. The compressed image then goes to the rendering engine block 30, which prepares the image for printing, using parameters set by the user control block 20. The image is finally printed by the marking engine block 40.

In FIG 2. the rendering engine block 30 is shown in greater detail. The compressed image from the compressed image source block 10 enters the image decompression block 32. Once decompressed, the image data, still in luminance and chrominance form then goes to the image resizing block 34 where it is resized so that the desired output size is achieved. Resizing means that the digital image is resampled so that the new pixel count, when applied to the output writing pitch of the particular printer, produces an image of a specified size. In the final image processing block 36 the image is (possibly) sharpened and converted to a color representation suitable for the marking engine block 40. The present invention pertains to the details of the image resizing block 34.

In FIG. 3, the image resizing block 34 is shown in greater detail. The output from the image decompression block 32 enters the image resizing block 34 where the luminance image data and the chrominance image data are resized by different processes. In the luminance resizing block 52, the luminance data is resized according to the bilinear interpolation algorithm. In the chrominance resizing block 54, the chrominance data is resized according to the nearest neighbor interpolation algorithm. The resized luminance and chrominance image data is then sent to the final image processing block 36.

Long known in the prior art, there are two simple resampling algorithms called the nearest neighbor algorithm and the bilinear interpolation algorithm. (see, for example, p. 113 Digital Image Processing, Kenneth Castleman, Jet Propulsion Laboratory, Prentice-Hall 1979) The nearest neighbor algorithm resizes by replicating the code value of the pixel nearest the new sample point. It is very fast because no new code values are computed, however, it tends to distort the fine details of the image. The bilinear interpolation algorithm does a much better job with the fine detail of the image, however, it is noticeably slower on low cost processors such as those found in camera-printer systems. The difference in processing time becomes even more apparent as the pixel count of an image increases. The present invention is especially well-suited for stand-alone printers and digital camera-printer systems that must quickly and inexpensively produce multi-megapixel images with reasonable image quality.

In accordance with the present invention, it has been found quite unexpectedly that one can achieve the higher image quality of the bilinear interpolation algorithm while avoiding the majority of the time penalty by using the bilinear interpolation algorithm only for resizing the luminance channel and using the nearest neighbor algorithm to resize the two chrominance channels. The resulting resized image retains its fine detail and does so at a minimal time cost. Such a system performance trade-off is ideal for a low cost stand-alone printer design or a low cost digital camera-printer design. Thus, the image resizing block 34 is able to produce a resized image having reasonable fine detail image quality, without incurring a corresponding time penalty.

Likewise, in accordance with the present invention, an RGB image represented by red, green, and blue image data can be resized quickly and at reasonable quality by first converting it to a G, (R-G), (B-G) representation, and then resizing the green channel as luminance, and the (R-G), (B-G) channels as chrominances. By summing with the resized green channel, the resized (R-G), (B-G) channels produce the resized red and blue channels of the final resized RGB image.

A computer program product may include one or more storage medium, for example; magnetic storage media such as magnetic disk (such as a floppy disk) or magnetic tape; optical storage media such as optical disk, optical tape, or machine readable bar code; solid-state electronic storage devices such as random access memory (RAM), or read-only memory (ROM); or any other physical device or media employed to store a computer program having instructions for controlling one or more computers to practice the method according to the present invention.

## Claims

1. A method of resizing a digital image represented as a luminance and two chrominance channels, comprising the steps of:
(a) resizing the luminance channel using bilinear interpolation; and
(b) resizing the chrominanace channels using nearest neighbor interpolation.

2. A method of resizing an RGB digital image, comprising the steps of:
(a) resizing the green channel using bilinear interpolation;
(b) forming the (R-G) and (B-G) chrominance channels;
(c) resizing the(R-G), (B-G) channels using nearest neighbor interpolation; and
(d) forming the resized red and blue color channels.

3. A method in accordance with claim 1, used in a stand-alone printer or a digital camera-printer system.

4. A method in accordance with claim 2, used in a stand-alone printer or a digital camera-printer system.

5. A method in accordance with claim 3, used in combination with an image compression and decompression method utilizing a luminance and chrominance image representation.

6. A method in accordance with claim 5, wherein the image compression and decompression method is JPEG compression.

7. A computer program product using the method of claim1.
